# EUROPEAN PATENT SPECIFICATION

(11) **EP 3 320 178 B1**
(45) Date of publication and mention of the grant of the patent: **05.08.2026**
(21) Application number: 16822002.8
(22) Date of filing: 07.07.2016
(51) Int. Cl.: E21B 47/02

(54) **METHOD AND SYSTEM FOR IMPROVING QUALITY OF DIRECTIONAL SURVEYS**
VERFAHREN UND SYSTEM ZUR VERBESSERUNG DER QUALITÄT VON RICHTVERMESSUNGEN
PROCÉDÉ ET SYSTÈME PERMETTANT D'AMÉLIORER LA QUALITÉ DES SONDAGES DIRECTIONNELS

(30) Priority: 07.07.2015 US 201562189726 P
(43) Date of publication of application: 16.05.2018
(73) Proprietor: Surcon Ltd., Denver, CO 80265 (US)
(72) Inventor: DEVERSE, Jarrod, Shawn, Greenwood Village, CO 80121 (US); MAUS, Stefan, Boulder, Colorado 80305 (US)
(74) Representative: Wright, Howard Hugh Burnby
(86) International application number: PCT/US2016/041394
(87) International publication number: WO 2017/007967

(56) References cited:
- WO-A1-2014/160629
- WO-A1-2014/160629
- WO-A1-2015/026502
- WO-A1-2015/026502
- WO-A1-2015/084401
- WO-A1-2015/178945
- US-A1- 2013 002 257
- US-A1- 2013 346 754
- US-A1- 2013 346 754
- US-A1- 2015 168 176
- STEFAN MAUS: "Magnetic Referencing and Survey Accuracy for Horizontal Development in the Permian", 2 May 2015 (2015-05-02), XP055542462, Retrieved from the Internet <URL:https://www.magvar.com/sites/default/files/misc_files/MagVAR_AADE_Houston_2014-02-05.pdf> [retrieved on 20190115]
- MAUS S. ET AL: "Field Acceptance Criteria Based on ISCWSA Tool Error Models", ISCWSA, 9 May 2014 (2014-05-09), XP055542116, ISBN: 978-1-61399-401-6, DOI: 10.2118/178843-MS
- STEFAN MAUS: "Systematic and Random Contributions to the Disturbance Field (IFR 2)", 30 October 2014 (2014-10-30), XP055542895, Retrieved from the Internet <URL:http://www.iscwsa.net/download/a2ee56b8-b64d-11e6-99bb-e117362139ff/> [retrieved on 20190116]

## Description

### CROSS-REFERENCE TO RELATED APPLICATIONS

This application claims the benefit of U.S. Provisional Application No. 62/189726, filed 7 July 2015.

### BACKGROUND

Directionally drilled oil and gas wells use downhole MWD (measurement while drilling) instruments to acquire survey information necessary for steering and wellbore placement. MWD instruments house three accelerometers and three magnetometers positioned in three orthogonal axes. This combination of sensors allows for complete measurement of the Earth's magnetic and gravitational fields. As a result, MWD instruments can compute inclination and direction of the wellbore by measuring the MWD instrument's orientation with respect to the gravity and magnetic reference field vectors. Such a measurement at a single point or "station" is called a survey. The wellbore position is computed from a sequence of surveys taken along the wellbore.

Standard MWD surveying is subject to numerous error sources, which can lead to inaccurate wellbore placement. These sources of error are divided into three categories: gross, random, and systematic. Gross errors occur from human mistakes, instrument failure, or environmental factors that cannot be predicted or estimated. Random and systematic errors occur with some measure of predictability and can therefore be estimated and quantified. The standard approach for estimating positional uncertainty in the wellbore caused by random and systematic survey errors is to use instrument performance models called tool codes. Tool codes provide the mathematical frame to compute Ellipsoids of Uncertainty (EOUs), which represent positional uncertainty evaluated at a particular sigma or confidence level. (The Operator's Wellbore Survey Group (OWSG) publishes a set of Instrument Performance Models that enables the computation of EOUs for specific surveying methods. This consolidated set is referred to as the OWSG set of tool codes, or simply tool codes.) The MWD tool code used for EOU and anti-collision calculations specifies the permissible magnitude of the various error terms. The MWD tool code also assumes that surveys are free of gross error, since gross error cannot be predicted or modeled. To validate EOU and anti-collision scans, it is therefore essential to quality control (QC) MWD measurements to verify that they are free of gross errors and do not contain excessive random or systematic errors. If the quality control step is not performed, then there can be very little confidence that the tool code is representative of the actual errors in the wellbore position.

There are three values computed from MWD survey measurements which can be used for QC purposes. They are B total (strength of the magnetic field), Dip (direction of magnetic field with respect to horizontal plane), and G total (strength of the gravity field). (See, Ekseth, Roger, et al., "High-Integrity Wellbore Surveys: Methods for Eliminating Gross Errors," Presented at the SPE/IADC Drilling Conference, Amsterdam, 20-22 February. SPE-105558-MS). These measurements are used as metrics for survey quality, because regardless of the orientation of the wellbore and bottom-hole assembly (BHA,) the measured B total, Dip, and G total should be equal to the values provided by the geomagnetic and gravity reference models. Therefore, any differences between the measured values and reference values (Δ B total, Δ Dip, and Δ G total) can be attributed to some combination of measurement error and reference error. This concept is the basis for standard single-station MWD survey quality control tests.

It is common in standard MWD surveying practice to rely on these single-station tests as the only metric for survey quality assurance. However, these tests are considerably lacking in their ability to fully validate the assumptions made by the tool code. (See, Ekseth, Roger, et al., "The Reliability Problem Related to Directional Survey Data," Presented at the IADC/SPE Asia Pacific Drilling Technology Conference and Exhibition held in Bangkok, Thailand, 13-15, November 2006, IADC/SPE 103734.) For instance, typical quality control (QC) tolerances used by MWD contractors for passing or failing surveys are often arbitrary. Furthermore, it is not enough to evaluate each survey individually because single-station QC tests are extremely limited in their ability to distinguish different types of error. Finally, single-station QC tests are not capable of detecting certain types of gross human errors such as applying an incorrect north reference or misreporting the final survey measurement.

Independent survey quality validation and analysis requires specialized tools and skillsets that are not readily available to most rig site personnel. As a result, the most powerful form of survey quality assurance comes from independent and expert analysis by specialized processionals in remote operating centers. However, historically, it has been challenging to transfer the necessary MWD survey data to remote centers without compromising data integrity or adding cumbersome and time-consuming steps to the drilling process. The current practice is for rig personnel to download or copy the raw survey measurements from the MWD decoding software and send them to a remote processing center via email in the form of an attached spreadsheet or text file. The data then gets transferred from the emailed file into a particular format that enables survey processing software to process and correct the surveys. Survey corrections are then sent back to the rig site personnel via email.

A standard exists for communicating rig data called Wellsite Information Transfer Standard Markup Language (WITSML). The purpose of WITSML is to serve as a common language for all data to be transferred from the rig site to remote locations where the data are processed and evaluated. There are WITSML aggregators that receive data at the rig site, convert the data to WITSML, and transmit the data to a WITSML server through an Internet connection or satellite uplink. See, for example, U.S. Patent No. 8,615,660 to Selman et al., "Cloud computing system for real-time streaming of well logging data with self-aligning satellites," 24 December 2013. Currently, there is no standard protocol for transmitting all types of data, particularly raw MWD survey measurements. This creates a challenge when trying to send this data type to WITSML servers via a WITSML aggregator.

WO 2014/160629 A1 discloses a method for automatically evaluating a survey of a subterranean wellbore including receiving downhole navigation sensor measurements and automatically evaluating surface sensor data obtained at substantially the same time as the navigation sensor measurements to determine whether or not the navigation sensor measurements were obtained during satisfactory wellbore survey conditions.

US 2013/346754 A1 discloses a cloud computing system for real-time streaming of drilling data from a drilling rig using satellites, wherein the system includes client devices for transmitting the drilling data.

WO 2015/026502 A1 discloses a drilling method including collecting survey data at a drilling site, and determining a waypoint or borehole path based on the survey data. The drilling method also includes sending the survey data to a remote monitoring facility that applies corrections to the survey data. The drilling method also includes receiving the corrected survey data, and automatically updating the waypoint or borehole path based on the corrected survey data.

### SUMMARY

The invention is set out in the appended set of claims.

### BRIEF DESCRIPTION OF DRAWINGS

The following is a description of the figures in the accompanying drawings. The figures are not necessarily to scale, and certain figures and certain views of the figures may be shown exaggerated in scale or in schematic in the interest of clarity and conciseness.
FIG. 1 is a block diagram of a survey quality assurance tool in an example environment.
FIG. 2 illustrates a method of communicating rig site data from a rig site to a remote operating center using the survey quality assurance tool of FIG. 1.
FIGS. 3 and 4 show an example process workflow for survey quality assurance and MWD data transfer using the survey quality assurance tool of FIG. 1.

### DETAILED DESCRIPTION

A survey quality assurance tool that facilitates quality control and correction of survey data is disclosed herein. In one embodiment, the survey quality assurance tool provides an interface between rig site users and remote operating centers using web technology. The survey quality assurance tool optimizes the transfer of directional survey data from rig site to remote operating centers in such a way that minimizes time-consuming steps while simultaneously providing automatic data validation ensuring data integrity. The survey quality assurance tool is a leap forward from traditional methods of emailing text files and spreadsheets between end users because it not only speeds up the entire process but also significantly reduces the occurrence of transcription and clerical errors. The survey quality assurance tool is easily accessible almost anywhere in the world by simply logging in through a standard web browser. This eliminates the need for specialized software at the rig site and remote operating centers.

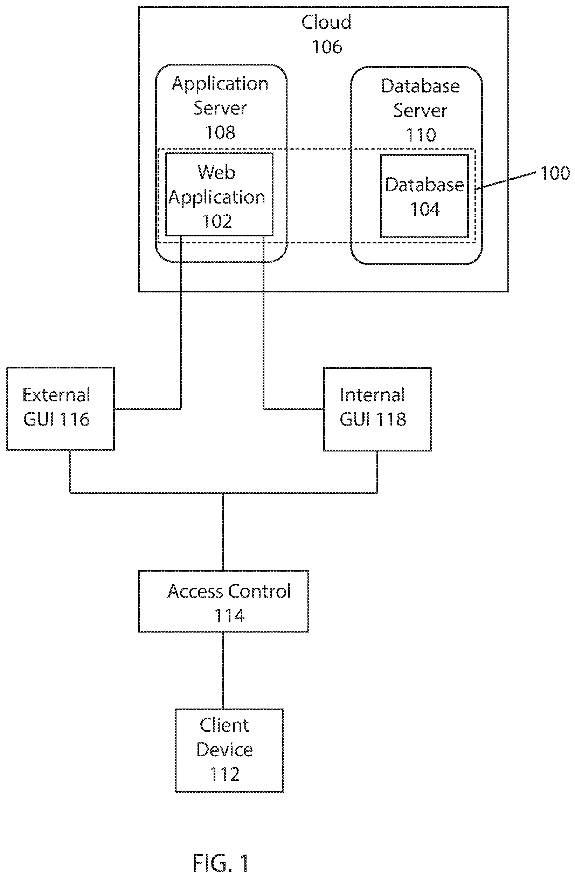

FIG. 1 is a simplified diagram of an illustrative survey quality assurance tool 100 in an example environment. The survey quality assurance tool 100 includes a web application 102 and a database 104. As used herein, the term "web application" refers to an application program that is stored on a remote server and delivered over the Internet through a browser interface. The web application 102 includes logic and other processes for receiving survey measurements, verifying the survey measurements using one or more quality control metrics, alerting the rig if the survey measurements fail any of the quality control metrics, making the survey measurements available for corrective survey data analysis at a remote site, and making corrected survey measurements available for drilling of a wellbore at the rig. The database 104 is used to store raw survey data and corrected survey data. In one embodiment, the web application 102 and database 104 are deployed in a cloud 106. The term "cloud" is used in the sense that the web application 102 and database 104 are stored online and accessible via a standard web browser and Internet connection. The cloud 106 includes the necessary computing resources, such as processor(s) and memory, to run the web application 102 and database 104 on-demand. In one example, the cloud 106 may include an application server 108 that exposes the logic and processes of the web application 102 and a database server 110 that provides database services.

The web application 102 is accessible from a standard web browser on a client device 112. Interaction with the web application 102 occurs through an external graphical user interface (GUI) 116 or an internal GUI 118, either of which may be displayed in the web browser on the client device 112. The terms "external" and "internal" are arbitrary. Typically, the external GUI 116 will be displayed to a user assigned a non-specialist role, typically a user at a rig site, and the internal GUI 118 will be displayed to a user assigned a specialist role, typically a user at a remote operating center. Access control 114 is used to restrict who can access the web application 102 through the external GUI 116 and internal GUI 118 and what features of the web application 102 can be accessed. Any authentication model suitable for use in a cloud environment may be used for the access control 114. Access control 114 may include displaying a login page in the web browser on the client device 112, receiving a user name and password from the browser, and checking the user name and password against an access control list to see if the user may access the web application 102 and what role the user has when accessing the web application 102.

In one embodiment, the web application 102 includes logic for receiving raw survey data through the external GUI 116. The web application 102 may further include logic for performing quality control (QC) checks on the raw survey data. The web application 102 may further include logic for storing QC verified survey data in the database 104. The web application 102 may further include logic for making the QC verified survey data available on the internal GUI 118. The web application 102 may further include logic for accepting corrected survey data through the internal GUI 118. The web application 102 may further include logic for performing QC checks on the corrected survey data. The web application 102 may further include logic for storing corrected survey data or QC verified corrected survey data in the database 104. The web application 102 may further include logic for making the corrected survey data available on the external GUI 116. The web application 102 may further include logic for generating context appropriate notifications and making them available on the client device 112 through either of the external GUI 116 and internal GUI 118.

In one embodiment, the web application 102 is provided as computer readable program instructions. In one embodiment, a computer program product includes a computer readable storage medium on which the computer readable program instructions are stored. The computer readable program instructions can be executed by one or more processors to cause a computer or computing environment to perform the actions indicated in the instructions. Examples of computer readable storage media include, but are not limited to, CD-ROMS, flash drives, RAM chips, hard drives, EPROMs, etc. The computer readable storage medium on which the web application 102 is stored is non-transitory in that it does not include carrier waves and electronic signals passing wirelessly or over wired connections. In one embodiment, the computer readable program instructions representing the web application 102 can be downloaded from the computer readable storage medium to respective computing/processing devices or to an external computer or to an external storage device via a network.

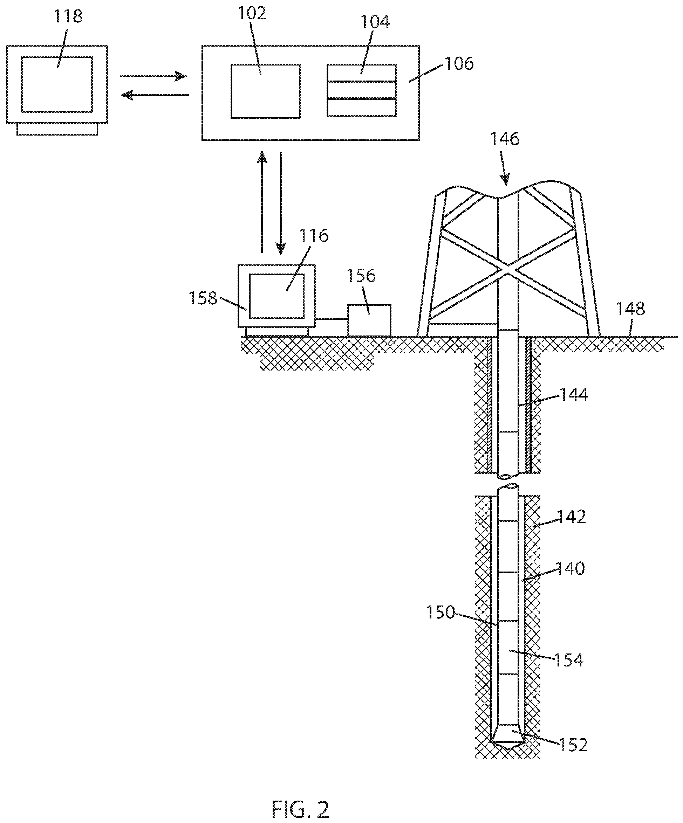

FIG. 2 shows a wellbore 140 drilled in a subsurface formation 142. A drill string 144 extends from a rig 146 at the surface 148 into the wellbore 146. A bottom-hole assembly (BHA) 150 is appended at the lower end of the drill string 144. The BHA 150 includes a drill bit 152 and may further include one or more downhole tools configured to perform one or more downhole operations. In one example, the BHA 150 includes a MWD tool 154. The MWD tool 154 may include three accelerometers and three magnetometers positioned in three orthogonal axes for making survey measurements. The MWD tool 154 may be operated to make survey measurements at selected depths in the wellbore. The survey measurements may be sent to a MWD unit 156 on the rig 146 by suitable wellbore telemetry, such as mud pulse telemetry, wired drill pipe telemetry, or electromagnetic telemetry. The MWD unit 156 may include MWD decoding software for decoding the survey measurements. The survey data may be transmitted from the MWD unit 156 to a rig computer 158 and displayed on the rig computer.

In one embodiment, a user on the rig 146 logs into the web application 102 from a standard browser. The standard browser may be accessed through the rig computer 158, for example. The web application presents an external GUI 116 to the user inside the browser. Through the external GUI 116, the rig user may enter the raw survey data into predefined fields or may upload an electronic file containing the raw survey data and then submit the data. The electronic file may be provided as a plain text file, a spreadsheet file, e.g., CSV file and the like, or a markup language file, e.g., XML file. Alternatively, an integration plug-in may be provided that enables the web application 102 to integrate with the MWD unit 156 and receive the survey data directly from the MWD unit 156 without requiring user input. The web application 102 may receive the survey data in response to a prompt from the user through the external GUI 118. The web application 102 may display the received data and allow the user to submit the data, e.g., by the click of a button on the external GUI 116. For MWD surveys, the submitted data may include the following: survey depth, inclination, azimuth, date, time, run number, survey type, X, Y, and Z accelerometer measurements, and X, Y, and Z magnetometer measurements. In addition, well information, such as well name, rig name, north reference, and survey tool type, may be provided to the web application along with the survey data.

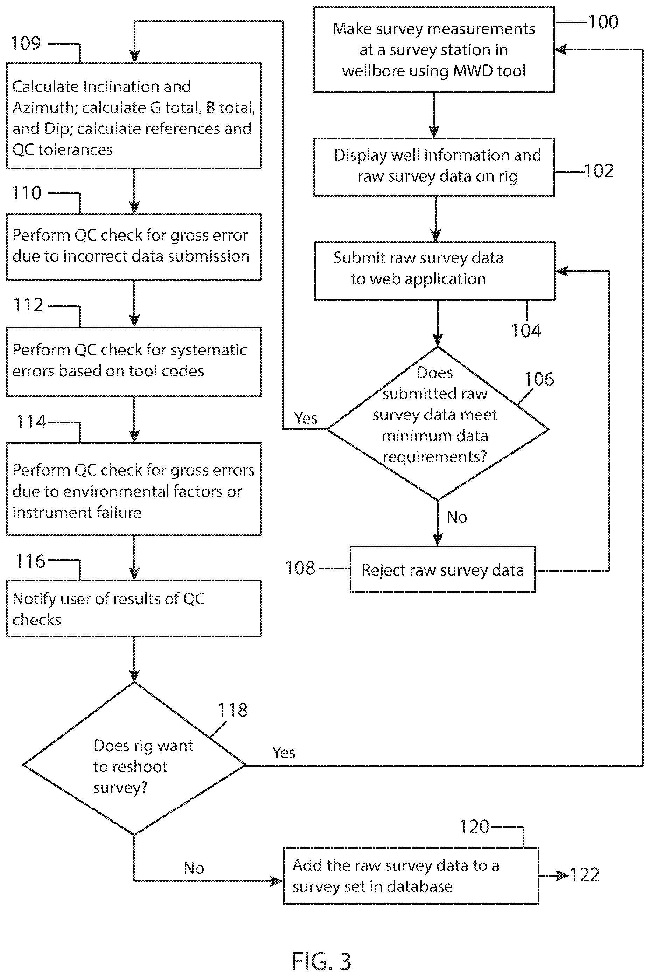

FIG. 3 is a flow chart illustrating an example process workflow for survey quality assurance and MWD data transfer using the survey quality assurance tool.

At 100, survey measurements are made at a survey station, or selected position, in the wellbore using the MWD tool.

At 102, the survey measurements are sent to the MWD unit on the rig and decoded. The raw survey data and well information are displayed on the rig computer.

At 104, the raw survey data is submitted to the web application. Any of the methods described above may be used to submit the raw survey data to the web application.

At 106, the web application verifies that the submitted survey data meets minimum data requirements. At a minimum, the submitted survey data should include the survey depth, inclination, and azimuth and the corresponding B total, G total, and Dip or the 6 axis data (accelerometer and magnetometer measurements). If the submitted data does not meet the minimum data requirement, the web application rejects the raw survey data, as shown at 108. At this point, new raw survey data may be submitted by returning to step 104.

At 109, if the submitted data meets the minimum data requirement, a set of parameters useful in QC validation of the survey data is calculated. The set of parameters may include inclination, azimuth, G total (strength of the gravity field), B total (strength of the magnetic field), and Dip (direction of magnetic field with respect to horizontal plane), reference values for total gravity, field strength, dip angle, declination, and grid convergence, and QC tolerances. Inclination and azimuth are calculated from the corresponding 6 axis accelerometer and magnetometer measurements if the 6 axis measurements are included in the submitted data. The QC tolerances are computed from the error coefficients specified in the tool code and scaled to the same sigma level used for collision avoidance planning. QC tolerances are calculated for measured depth, inclination, azimuth, Δ inclination, Δ azimuth, G total, B total, and Dip. QC tolerances can be calculated similarly to how measured depth, inclination and azimuth errors are calculated from tool code. (See, Maus, Stefan, Croke, Ryan. 2014. Field acceptance criteria based on ISCWSA tool error models. Presented at the ISCWSA meeting, Long Beach, 9 May 2014.)

At 110, a first QC check is made. The first QC check verifies that the submitted data is free of gross error due to incorrect data submission. Incorrect data submission may arise from the user entering the wrong data in the predefined fields in the external GUI or uploading the wrong file or a corrupt file through the external GUI. For the first QC check, if inclination and azimuth are calculated in step 109, the calculated inclination and azimuth (step 109) are compared to the rig reported inclination and azimuth (i.e., the inclination and azimuth stated in the raw survey data). If there are significant differences between the calculated inclination and azimuth and the rig reported inclination and azimuth, the submitted data will be considered as failing the first QC check. The first QC check also provides an independent check against the north reference, grid correction, and magnetic reference values being applied. North reference, grid correction, and magnetic reference are variables used to compute the azimuth. Thus if the calculated azimuth is correct, it can be concluded that the north reference, grid correction, and magnetic reference values being applied by the rig are correct.

At 112, a second QC check is made. The second validation check verifies that the survey QC measurements and systematic errors are within the QC tolerance limits computed at step 109. The survey measurement is validated against the tool code by evaluating differences between the measured values and reference values of B total, Dip, and G total, i.e., Δ B total, Δ Dip, and Δ G total, using the appropriate QC tolerances. If the Δ B total, Δ Dip, and Δ G total fall outside the calculated QC tolerance limits, then the survey measurement has greater error than what was modeled by the tool code EOUs and the anti-collision assessment may be invalid. If A B total, Δ Dip, and Δ G total fall outside the calculated QC tolerance limits, the submitted data will be considered as failing the second QC check.

At 114, a third QC check is made. The third QC check verifies that the data quality is adequate and free from gross errors due to environmental factors or instrument failure. The third QC check evaluates the current survey against the surveys taken at previous survey stations in order to identify trends that could alert the driller to gross errors indicative of external magnetic interference from offset well casing or a failing instrument. The third QC check may involve computing Δ B total, Δ Dip, and Δ G total (deltas) for each previous survey. These deltas or residuals will vary from one survey to the next. By evaluating the variances, the standard deviation across an entire data set consisting of the previous surveys can be calculated. The deltas for the current survey can be computed. The deltas for the current survey can be compared to the standard deviation to determine if the current survey is a statistical outlier. For example, if the differences between the deltas for the current survey measurements and the standard deviations exceed a certain threshold, such as 3 sigma, then the current survey could be considered a statistical outlier and suggest that there is a particular problem, such as poor telemetry decode or the BHA is in near proximity to an offset wellbore. If the current survey is a statistical outlier, the submitted data will be considered as failing the third QC check.

Although the terms first, second, and third QC checks are used, it should be clear that the QC checks can be performed in any order. Also, parts of step 109 can be completed while performing the QC checks.

At 116, the rig user is notified of the results of the QC checks. This may include displaying notices of any failed QC checks on the external GUI as well as displaying corresponding QC plots on the external GUI.

The QC checks of 110 to 116 can be fully automated and can occur almost as soon as the survey measurements are received on the rig. This allows an opportunity to give immediate feedback to the rig site personnel if there is a problem. Alerting the rig to potential problems in a timely manner creates an opportunity to reshoot the survey or elevate the concern to management before drilling begins again.

At 118, the process checks if the rig wants to reshoot the survey. If the rig does not want to reshoot the survey, the process goes to 120. If the rig wishes to reshoot the survey, e.g., because the survey data did not pass one or more of the QC validation tests, the process returns to 100.

At 120, the raw survey data is added to the survey set in the database. If the raw survey data failed any of the QC validation tests, the raw survey data may be flagged as such. Once the survey data is stored in the database on the cloud, the survey data can be accessed at a remote operating center through the internal GUI.

While the QC checks work well to detect potential problems in the survey quality, it does very little to identify the underlying cause of the problem or distinguish between the various sources of error. However, the survey data can be further evaluated using corrective survey data analysis techniques, such as multi-station analysis techniques, to determine individual error components attributed to sensor bias, scale, and misalignment. Trend analysis is also useful for recognizing patterns characteristic of magnetic drillstring interference, magnetic mud, and other environmental factors that contribute to survey error.

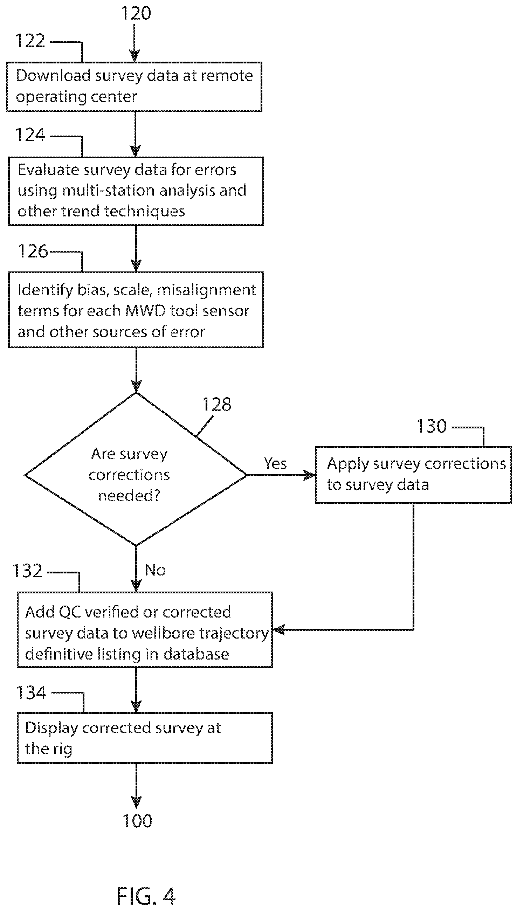

Referring to FIG. 4, at 122, a MWD specialist at a remote operating center downloads the survey data through the internal GUI.

At 124, the survey data is evaluated at the remote operating center. The survey data may be evaluated using one or more corrective survey data analysis techniques, such as multi-station analysis and other trend analysis techniques. Multi-station analysis is a technique widely used in the industry to correct systematic errors of magnetic MWD surveys associated with drillstring interference. (See, Nyres, Erik, et al., "Minimum Requirements for Multi-Station Analysis of MWD Magnetic Directional Surveys," Presented at SPE/IADC Middle East Drilling Technology Conference & Exhibition held in Manama, Bahrain, 26-28, October 2009, SPE/IADC 125677, and Brooks, A.G., et al., "Practical Application of a Multiple-Survey Magnetic Correction Algorithm," Presented at the 1998 SPE Annual Technical Conference and Exhibition held in New Orleans, Louisiana, 27-30 September 1998, SPE 49060.)

At 126, from the evaluation of 124, bias, scale, misalignment terms for each sensor in the MWD tool are identified. Other sources of error, i.e., drillstring interference, magnetic mud, and the like, are also identified.

At 128, the process involves checking if survey corrections are needed from the results of 126. If survey corrections are needed, the survey data is corrected at 130. The corrected survey data may be subject to QC checks similar to steps 110 through 114 in FIG. 3.

At 132, the QC-verified raw survey data or corrected survey data is added to the wellbore trajectory definitive listing in the database. The surveys on the wellbore trajectory definitive listing can be used to compute the wellbore trajectory during drilling of the wellbore.

At 134, the corrected survey data, or the last survey added to the wellbore trajectory definitive listing, is displayed at the rig using the external GUI. The process returns to 100 for the next survey measurement.

## Claims

1. A system for improving quality of directional surveys, comprising one or more processors and memory, wherein the memory and the one or more processors run a web application, the web application comprising instructions executable by the one or more processors to:
receive by the web application, raw survey data acquired by a survey tool located in a wellbore at a drilling rig site at a first location during a survey measurement from a wellbore (140) at the first location;
verify that the raw survey data meets minimum data requirements;
responsive to verifying that the raw survey data meets the minimum data requirements, calculate a set of quality control validation parameters, wherein the set of quality control validation parameters comprises quality control tolerances;
verify, by the web application, the quality of the raw survey data using quality control metrics, wherein the quality control metrics comprise:
(a) a first quality control check, wherein the first quality control check comprises verification that the raw survey data is free of gross error due to incorrect data submission (110), and at least one of the following:
(b) a second quality control check, wherein the second quality control check comprises verification that systematic errors in the raw survey data are within the quality control tolerances; and
(c) a third quality control check, wherein the third quality control check comprises verification that the raw survey data is adequate and free of gross error due to instrumental failure or external magnetic interference (114), and wherein the third quality control check evaluates the raw survey data against surveys taken at previous survey stations;
alert a drilling rig associated with the wellbore if the raw survey data is not verified with the quality control metrics;
store, by the web application, the verified raw survey data in a cloud (106) database (104);
provide access to the verified raw survey data from a second location that is remote from the first location;
wherein to perform the first quality control check, the web application is further configured to compute inclination and azimuth from accelerometer and magnetometer measurements included in the raw survey data; and
compare the computed inclination and azimuth to the inclination and azimuth reported in the raw survey data, wherein to perform the second quality control check, the web application is further configured to compute quality control tolerances for each of B total, Dip, and G total from a survey tool error model, where B total is strength of the magnetic field, Dip is direction of the magnetic field with respect to horizontal plane, and G total is strength of the gravity field;
determine if differences between measured values of B total, Dip, and G total determined by one or more sensors and reference values of B total, Dip, and G total fall within the corresponding quality control tolerances, wherein to perform the third quality control check, the web application is further configured to compute standard deviations of the differences between measured values of B total, Dip, and G total determined by the one or more sensors and reference values of B total, Dip, and G total for each survey station in a set of previous surveys made by the survey tool in the wellbore (140), where B total is strength of the magnetic field, Dip is direction of magnetic field with respect to horizontal plane, and G total is strength of the gravity field;
compute the differences between the measured values and the reference values of B total, Dip, and G total for the raw survey data; and
compare the differences between the measured values and reference values of B total, Dip, and G total for the raw survey data to the standard deviations to determine if the raw survey data is a statistical outlier;
alert, by the web application, an operator at the first location when the raw survey date fails one three quality control checks.

2. The system of claim 1, wherein the instructions further comprise instructions to:
receive, by the web application, corrected raw survey data from the second location, the corrected raw survey data being generated by applying at least one
survey correction to the verified raw survey data at the second location;
store the corrected raw survey data in the database (104);
display the corrected raw survey data at the first location; and
verify the quality of the corrected raw survey data using the at least one quality control metric.

3. The system of claim 1, wherein the web application is further configured to:
display an alert at the first location with a result of the verifying the quality of the raw survey data using the at least one quality control metrics; and
receive new raw survey data from the first location and repeat the verifying the quality of the raw survey data; and
store the verified raw survey data with the new raw survey data.

4. The system of claim 1, wherein the web application is further configured to, as part of the third quality check, evaluate the raw survey data against the survey data from one or more previous survey stations.

5. The system of claim 4, wherein the web application is further configured to, as part of the third quality check, calculate a standard deviation for the survey data set.

6. The system of claim 4, wherein the web application is further configured to evaluate the survey data set using a multi-station data analysis technique.

7. The system of claim 6, wherein as part of instructions to evaluate the survey data set using the multi-station data analysis technique the web application is further configured to determine a one or more sources of error in the survey data set.

8. A method for improving the quality of a directional survey, comprising:
receiving, by a web application (102), raw survey data from a survey tool located in a wellbore (140) at a drilling rig (146) site at a first location;
verifying, by the web application, that the raw survey data meets minimum data requirements;
responsive to verifying that the raw survey data meets the minimum data requirements, calculating, by the web application, a set of quality control validation parameters, wherein the set of quality control validation parameters comprises quality control tolerances;
verifying, by the web application, the quality of the raw survey data using quality control metrics, wherein the quality control metrics comprise:
a first quality control check, wherein the first quality control check comprises verification that the raw survey data is free of gross error due to incorrect data file submission (110), and at least one of the following:
a second quality control check, wherein the second quality control check comprises verification that systematic errors in the raw survey data are within the quality control tolerances (112); and
a third quality control check, wherein the third quality control check comprises verification that the raw survey data is adequate and free of gross error due to instrument failure and external magnetic interference (114), and wherein the third quality control check evaluates the raw survey data against surveys taken at previous survey stations;
alerting, by the web application, the drilling rig if the quality of the raw survey data is not verified with the quality control metrics; and
storing, by the web application, the raw survey data in a database (104) if the quality of the raw survey data is verified with the quality control metrics, wherein the database is adapted to be accessed from a second location that is remote from the first location allowing, by the web application (102), access to the verified raw survey data set from the second location;
performing, at a second location, at least one corrective survey data analysis on the verified raw survey data;
applying, at a second location, at least one survey correction to the verified raw survey data based on a result of the at least one corrective survey data analysis; and
receiving, by the web application, corrected survey data, thereby causing the web application to add the corrected survey data to the database; and
display the corrected survey data at the first location.

9. The method according to claim 8, wherein the database (104) comprises a cloud (106) database accessible via the Internet.

10. The method according to claim 8 further comprising allowing access to the corrected raw survey data by a user at the drilling rig (146) site.

11. A web application computer program product including non-transitory computer readable medium and computer readable code embodied on the non-transitory computer readable medium for improving quality of directional surveys, the web application comprising:
computer readable program code adapted to cause a computer to effect receiving raw survey data from a MWD tool positioned within a wellbore (140) at a drilling rig at a first location;
computer readable program code adapted to cause a computer to effect verifying that the raw survey data meets minimum data requirements, the raw survey data including data corresponding to a survey depth, inclination and azimuth and the corresponding B total, G total, and Dip or 6 axis data corresponding to accelerometer and magnetometer measurements;
computer readable program code adapted to cause a computer to effect calculating, responsive to verifying that the raw survey data meets the minimum data requirements, a set of quality control validation parameters, wherein the set of quality control validation parameters comprises quality control tolerances based on error coefficients and scaled to the same sigma level used for collision avoidance planning;
computer readable program code adapted to cause a computer to effect verifying the quality of the raw survey data using quality control metrics, wherein the quality control metrics comprise:
(a) a first quality control check, wherein the first quality control check comprises verification that the raw survey data is free of gross error due to incorrect data file submission (110), and at least one of the following:
(b) a second quality control check, wherein the second quality control check comprises verification that systematic errors in the raw survey data are within the quality control tolerances, wherein the second quality control check comprises computing quality control tolerances for each of B total, Dip, and G total from a survey tool error model, where B total comprises strength of the magnetic field, Dip comprises direction of magnetic field with respect to horizontal plane, and G total comprises strength of the gravity field and determining if the differences between measured values and reference values of B total, Dip, and G total fall within the corresponding quality control tolerances; and
(c) a third quality control check, wherein the third quality control check comprises verification that the raw survey data is adequate and free of gross error due to instrumental failure or external magnetic interference (114), and wherein the third quality control check evaluates the raw survey data against surveys taken at previous survey stations wherein the third quality control check comprises computing standard deviations of the differences between measured values and reference values of B total, Dip, and G total for each survey station in a set of previous surveys made by a survey tool in the wellbore (140), where B total comprises strength of the magnetic field, Dip comprises direction of magnetic field with respect to horizontal plane, and G total comprises strength of the gravity field; computing differences between measured values and reference values of B total, Dip, and G total for the raw survey data; and comparing the differences between measured values and reference values of B total, Dip, and G total for the raw survey data to the standard deviations to determine if the raw survey data comprises a statistical outlier;
computer readable program code adapted to cause a computer to effect alerting a drilling rig associated with the wellbore if the raw survey data is not verified with the quality control metrics; and
computer readable program code adapted to cause a computer to effect storing the verified raw survey data in a database in a cloud
computer readable program code adapted to cause a computer to effect display of the survey data at the drilling rig via an external GUI.

12. The computer program product of claim 11, wherein the computer readable code further comprises computer readable program code adapted to cause a computer to effect verifying the quality of the corrected raw survey data by:
computing inclination and azimuth from a plurality of accelerometer and magnetometer measurements included in the raw survey data; and
comparing the computed inclination and azimuth to the inclination and azimuth reported in the raw survey data.

13. The computer program product of claim 11, wherein the computer readable code further comprises computer readable program code adapted to cause a computer to effect retrieving verified survey data from the database (104) from a second location that is remote to the first location.

14. The computer program product of claim 11, wherein the third quality control check further comprises identifying a trend based on evaluating the raw survey data against the survey data from the one or more previous survey stations.

15. The computer program product of claim 11, wherein the web application further comprises computer readable program code adapted to determine one or more survey corrections from the survey data set.

## Patentansprüche

1. System zur Verbesserung von Qualität von Richtvermessungen, umfassend einen oder mehrere Prozessoren und Speicher, wobei der Speicher und der eine oder die mehreren Prozessoren eine Webanwendung ausführen, wobei die Webanwendung Anweisungen umfasst, die von dem einen oder den mehreren Prozessoren ausgeführt werden können zum:
Empfangen durch die Webanwendung von Vermessungsrohdaten, die durch ein Vermessungswerkzeug erfasst wurden, das in einem Bohrloch an einem Bohranlagenort eines ersten Standorts während einer Vermessung von einem Bohrloch (140) an dem ersten Standort gelegen ist;
Verifizieren, dass die Vermessungsrohdaten Mindestanforderungen an die Daten erfüllen;
als Reaktion auf Verifizieren, dass die Vermessungsrohdaten die Mindestanforderungen an die Daten erfüllen, Berechnen eines Satz von Validierungsparametern zur Qualitätskontrolle, wobei der Satz von Validierungsparametern zur Qualitätskontrolle Qualitätskontrolltoleranzen umfasst;
Verifizieren durch die Webanwendung der Qualität der Vermessungsrohdaten unter Verwendung von Kennzahlen der Qualitätskontrolle, wobei die Kennzahlen der Qualitätskontrolle Folgendes umfassen:
(a) eine erste Qualitätskontrollprüfung, wobei die erste Qualitätskontrollprüfung Verifikation umfasst, dass die Vermessungsrohdaten frei von groben Fehlern aufgrund von unkorrekter Datenabgabe (110) sind, und mindestens eines von Folgendem:
(b) eine zweite Qualitätskontrollprüfung, wobei die zweite Qualitätskontrollprüfung Verifikation umfasst, dass systematische Fehler in den Vermessungsrohdaten innerhalb der Qualitätskontrolltoleranzen liegen; und
(c) eine dritte Qualitätskontrollprüfung, wobei die dritte Qualitätskontrollprüfung Verifikation umfasst, dass die Vermessungsrohdaten angemessen und frei von groben Fehlern aufgrund von Instrumentenfehlern oder externen magnetischen Interferenzen (114) sind, und wobei die dritte Qualitätskontrollprüfung die Vermessungsrohdaten anhand von an früheren Vermessungsstationen genommenen Vermessungen beurteilt;
Warnen einer Bohranlage, die dem Bohrloch zugeordnet ist, wenn die Vermessungsrohdaten nicht mit den Kennzahlen der Qualitätskontrolle verifiziert wurden;
Speichern durch die Webanwendung der verifizierten Vermessungsrohdaten in einer Cloud-(106)-Datenbank (104); Bereitstellen von Zugriff auf die verifizierten Vermessungsrohdaten von einem zweiten Standort, der vom ersten Standort entfernt ist;
wobei zum Durchführen der ersten Qualitätskontrollprüfung die Webanwendung weiter so konfiguriert ist, dass sie Neigung und Azimut aus Beschleunigungsmesser- und Magnetometermessungen, die in den Vermessungsrohdaten enthalten sind, berechnet; und
Vergleichen der berechneten Neigung und des berechneten Azimuts mit in den Vermessungsrohdaten gemeldeter Neigung und Azimut, wobei zum Durchführen der zweiten Qualitätskontrollprüfung die Webanwendung weiter so konfiguriert ist, dass sie Qualitätskontrolltoleranzen für jedes von B total, Dip und G total aus einem Fehlermodell des Vermessungswerkzeugs berechnet, wobei B total Stärke des Magnetfelds ist, Dip Richtung des Magnetfelds in Bezug auf eine horizontale Ebene ist und G total Stärke des Gravitationsfelds ist;
Bestimmen, ob Differenzen zwischen gemessenen Werten von B total, Dip und G total, die durch einen oder mehrere Sensoren bestimmt sind, und Referenzwerten von B total, Dip und G total innerhalb der entsprechenden Qualitätskontrolltoleranzen fallen, wobei zum Durchführen der dritten Qualitätskontrollprüfung die Webanwendung weiter so konfiguriert ist, dass sie Standardabweichungen der Differenzen zwischen gemessenen Werten von B total, Dip und G total, die durch den einen oder die mehreren Sensoren bestimmt sind, und Referenzwerten von B total, Dip und G total für jede Vermessungsstation in einem Satz früherer Vermessungen, der durch das Vermessungswerkzeug im Bohrloch (140) erstellt wurde, berechnet, wobei B total Stärke des Magnetfelds ist, Dip Richtung des Magnetfelds in Bezug auf eine horizontale Ebene ist und G total Stärke des Gravitationsfelds ist;
Berechnen der Differenzen zwischen den gemessenen Werten und den Referenzwerten von B total, Dip und G total für die Vermessungsrohdaten; und
Vergleichen der Differenzen zwischen den gemessenen Werten und Referenzwerten von B total, Dip und G total für die Vermessungsrohdaten mit den Standardabweichungen, um zu bestimmen, ob die Vermessungsrohdaten ein statistischer Ausreißer sind;
Warnen durch die Webanwendung einer Bedienperson am ersten Standort, wenn die Vermessungsrohdaten bei drei Qualitätskontrollprüfungen durchgefallen sind.

2. System nach Anspruch 1, wobei die Anweisungen weiter Anweisungen umfassen zum:
Empfangen durch die Webanwendung von berichtigten Vermessungsrohdaten von dem zweiten Standort, wobei die berichtigten Vermessungsrohdaten durch Anwenden mindestens einer Vermessungsberichtigung auf die verifizierten Vermessungsrohdaten am zweiten Standort erzeugt werden;
Speichern der berichtigten Vermessungsrohdaten in der Datenbank (104);
Anzeigen der berichtigten Vermessungsrohdaten am ersten Standort; und
Verifizieren der Qualität der berichtigten Vermessungsrohdaten unter Verwendung der mindestens einen Kennzahl der Qualitätskontrolle.

3. System nach Anspruch 1, wobei die Webanwendung weiter so konfiguriert ist, dass sie:
eine Warnung am ersten Standort mit einem Ergebnis der Verifizierung der Qualität der Vermessungsrohdaten unter Verwendung der mindestens einen Kennzahl der Qualitätskontrolle anzeigt; und
Empfangen von neuen Vermessungsrohdaten vom ersten Standort und Wiederholen des Verifizierens der Qualität der Vermessungsrohdaten; und
Speichern der verifizierten Vermessungsrohdaten mit den neuen Vermessungsrohdaten.

4. System nach Anspruch 1, wobei die Webanwendung weiter so konfiguriert ist, dass sie als Teil der dritten Qualitätsprüfung die Vermessungsrohdaten anhand der Vermessungsdaten von einer oder mehreren früheren Vermessungsstationen beurteilt.

5. System nach Anspruch 4, wobei die Webanwendung weiter so konfiguriert ist, dass sie als Teil der dritten Qualitätsprüfung eine Standardabweichung für den Satz von Vermessungsdaten berechnet.

6. System nach Anspruch 4, wobei die Webanwendung weiter so konfiguriert ist, dass sie den Satz von Vermessungsdaten unter Verwendung einer Datenanalysetechnik mit mehreren Stationen beurteilt.

7. System nach Anspruch 6, wobei als Teil von Anweisungen zum Beurteilen des Satzes von Vermessungsdaten unter Verwendung der Datenanalysetechnik mit mehreren Stationen die Webanwendung weiter so konfiguriert ist, dass sie eine oder mehrere Fehlerquellen im Satz von Vermessungsdaten beurteilt.

8. Verfahren zur Verbesserung der Qualität einer Richtvermessung, umfassend:
Empfangen durch eine Webanwendung (102) von Vermessungsrohdaten von einem Vermessungswerkzeug, das in einem Bohrloch (140) an einem Bohranlagen-(146)-Ort an einem ersten Standort gelegen ist;
Verifizieren durch die Webanwendung, dass die Vermessungsrohdaten Mindestanforderungen an die Daten erfüllen;
als Reaktion auf Verifizieren, dass die Vermessungsrohdaten die Mindestanforderungen an die Daten erfüllen, Berechnen durch die Webanwendung eines Satz von Validierungsparametern zur Qualitätskontrolle, wobei der Satz von Validierungsparametern zur Qualitätskontrolle Qualitätskontrolltoleranzen umfasst;
Verifizieren durch die Webanwendung der Qualität der Vermessungsrohdaten unter Verwendung von Kennzahlen der Qualitätskontrolle, wobei die Kennzahlen der Qualitätskontrolle Folgendes umfassen:
eine erste Qualitätskontrollprüfung, wobei die erste Qualitätskontrollprüfung Verifikation umfasst, dass die Vermessungsrohdaten frei von groben Fehlern aufgrund unkorrekter Datenabgabe (110) sind, und mindestens eines von Folgendem:
eine zweite Qualitätskontrollprüfung, wobei die zweite Qualitätskontrollprüfung Verifikation umfasst, dass systematische Fehler in den Vermessungsrohdaten innerhalb der Qualitätskontrolltoleranzen liegen (112); und
eine dritte Qualitätskontrollprüfung, wobei die dritte Qualitätskontrollprüfung Verifikation umfasst, dass die Vermessungsrohdaten angemessen und frei von groben Fehlern aufgrund von Instrumentenfehlern und externen magnetischen Interferenzen (114) sind, und wobei die dritte Qualitätskontrollprüfung die Vermessungsrohdaten anhand von an früheren Vermessungsstationen genommenen Vermessungen beurteilt;
Warnen durch die Webanwendung der Bohranlage, wenn die Qualität die Vermessungsrohdaten nicht mit den Kennzahlen der Qualitätskontrolle verifiziert wurden; und
Speichern durch die Webanwendung der Vermessungsrohdaten in einer Datenbank (104), wenn die Qualität die Vermessungsrohdaten mit den Kennzahlen der Qualitätskontrolle verifiziert wurde, wobei die Datenbank so angepasst ist, dass von einem zweiten Standort, der vom ersten Standort entfernt ist, darauf zugegriffen werden kann, um es der Webanwendung (102) zu ermöglichen, auf den Satz verifizierter Vermessungsrohdaten von dem zweiten Standort Vermessungsrohdaten zuzugreifen, um an einem zweiten Standort mindestens eine berichtigende Vermessungsdatenanalyse an den verifizierten Vermessungsrohdaten durchzuführen;
Anwenden an einem zweiten Standort von mindestens einer Vermessungsberichtigung an den verifizierten Vermessungsrohdaten basierend auf einem Ergebnis der mindestens einen berichtigenden Vermessungsdatenanalyse; und Empfangen durch die Webanwendung von berichtigten Vermessungsdaten, dadurch Bewirken, dass die Webanwendung die berichtigten Vermessungsdaten zur Datenbank hinzufügt; und
Anzeigen der berichtigten Vermessungsdaten am ersten Standort.

9. Verfahren nach Anspruch 8, wobei die Datenbank (104) eine Cloud-(106)-Datenbank umfasst, auf die über das Internet zugegriffen werden kann.

10. Verfahren nach Anspruch 8, weiter umfassend: Zulassen von Zugriff auf die berichtigten Vermessungsrohdaten durch einen Benutzer an dem Bohranlagen-(146)-Ort.

11. Computerprogrammprodukt für eine Webanwendung, das ein nichtflüchtiges, computerlesbaren Medium und computerlesbaren Code einschließt, der auf dem nichtflüchtigen, computerlesbaren Medium verkörpert ist, zur Verbesserung von Qualität von Richtvermessungen, wobei die Webanwendung Folgendes umfasst:
computerlesbaren Programmcode, der so angepasst ist, dass er bewirkt, dass ein Computer Empfangen von Vermessungsrohdaten von einem MWD-Werkzeug vornimmt, das innerhalb eines Bohrlochs (140) an einer Bohranlage an einem ersten Standort positioniert ist;
computerlesbaren Programmcode, der so angepasst ist, dass er bewirkt, dass ein Computer Verifizieren vornimmt, dass die Vermessungsrohdaten Mindestanforderungen an die Daten erfüllen, wobei die Vermessungsrohdaten Daten einschließen, die einer Vermessungstiefe, -neigung und -azimut entsprechen und die entsprechenden B total-, G total- und Dip- oder 6-Achsendaten Beschleunigungsmesser- und Magnetometermessungen entsprechen;
computerlesbaren Programmcode, der so angepasst ist, dass er bewirkt, dass ein Computer als Reaktion auf Verifizieren, dass die Vermessungsrohdaten die Mindestanforderungen an die Daten erfüllen, Berechnung eines Satzes von Validierungsparametern zur Qualitätskontrolle vornimmt, wobei der Satz von Validierungsparametern zur Qualitätskontrolle Qualitätskontrolltoleranzen umfasst, die auf Fehlerkoeffizienten basieren und auf das gleiche Sigma-Niveau skaliert sind, das für Kollisionsvermeidungsplanung verwendet wird;
computerlesbaren Programmcode, der so angepasst ist, dass er bewirkt dass ein Computer Verifizieren der Qualität der Vermessungsrohdaten unter Verwendung von Kennzahlen der Qualitätskontrolle vornimmt, wobei die Kennzahlen der Qualitätskontrolle Folgendes umfassen:
(a) eine erste Qualitätskontrollprüfung, wobei die erste Qualitätskontrollprüfung Verifikation umfasst, dass die Vermessungsrohdaten frei von groben Fehlern aufgrund unkorrekter Datendateiabgabe (110) sind, und mindestens eines von Folgendem:
(b) eine zweite Qualitätskontrollprüfung, wobei
die zweite Qualitätskontrollprüfung Verifikation umfasst, dass systematische Fehler in den Vermessungsrohdaten innerhalb der Qualitätskontrolltoleranzen liegen, wobei die zweite Qualitätskontrollprüfung Berechnen von Qualitätskontrolltoleranzen für jedes von B total, Dip und G total aus einem Fehlermodell des Vermessungswerkzeugs umfasst, wobei B total Stärke des Magnetfelds umfasst, Dip Richtung des Magnetfelds in Bezug auf eine horizontale Ebene umfasst und G total Stärke des Gravitationsfelds umfasst, und Bestimmen, ob die Differenzen zwischen gemessenen Werten und Referenzwerten von B total, Dip und G total innerhalb der entsprechenden Qualitätskontrolltoleranzen fallen; und
(c) eine dritte Qualitätskontrollprüfung, wobei
die dritte Qualitätskontrollprüfung Verifikation umfasst, dass die Vermessungsrohdaten angemessen und frei von groben Fehlern aufgrund von Instrumentenfehlern oder externen magnetischen Interferenzen (114) sind, und wobei die dritte Qualitätskontrollprüfung die Vermessungsrohdaten anhand Vermessungen beurteilt, die an früherer Vermessungsstationen genommen wurden, wobei die dritte Qualitätskontrollprüfung Berechnen von Standardabweichungen der Differenzen zwischen gemessenen Werten von B total, Dip und G total und Referenzwerten von B total, Dip und G total für jede Vermessungsstation in einem Satz früherer Vermessungen, der durch das Vermessungswerkzeug im Bohrloch (140) erstellt wurde, umfasst, wobei B total Stärke des Magnetfelds umfasst, Dip Richtung des Magnetfelds in Bezug auf eine horizontale Ebene umfasst und G total Stärke des Gravitationsfelds umfasst;
Berechnen von Differenzen zwischen gemessenen Werten und Referenzwerten von B total, Dip und G total für die Vermessungsrohdaten; und Vergleichen der Differenzen zwischen gemessenen Werten und Referenzwerten von B total, Dip und G total für die Vermessungsrohdaten mit den Standardabweichungen, um zu bestimmen, ob die Vermessungsrohdaten ein statistischer Ausreißer sind;
computerlesbaren Programmcode, der so angepasst ist, dass er bewirkt, dass ein Computer Warnen einer Bohranlage, die dem Bohrloch zugeordnet ist, vornimmt, wenn die Vermessungsrohdaten nicht mit den Kennzahlen der Qualitätskontrolle verifiziert wurden; und
computerlesbaren Programmcode, der so angepasst ist, dass er bewirkt, dass ein Computer Speichern der verifizierten Vermessungsrohdaten in einer Datenbank in einem computerlesbaren Cloud-Programmcode vornimmt, der so angepasst ist, dass er bewirkt, dass ein Computer Anzeigen der Vermessungsdaten an der Bohranlage über eine externe GUI vornimmt.

12. Computerprogrammprodukt nach Anspruch **11,** wobei der computerlesbare Code weiter computerlesbaren Programmcode umfasst, der so angepasst ist, dass er bewirkt, dass ein Computer Verifizieren der Qualität der berichtigten Vermessungsrohdaten vornimmt durch:
Berechnen von Neigung und Azimut aus einer Vielzahl von Beschleunigungsmesser- und Magnetometermessungen, die in den Vermessungsrohdaten eingeschlossen sind; und
Vergleichen der berechneten Neigung und des berechneten Azimuts mit in den Vermessungsrohdaten gemeldeter Neigung und Azimut.

13. Computerprogrammprodukt nach Anspruch **11,** wobei der computerlesbare Code weiter computerlesbaren Programmcode umfasst, der so angepasst ist, dass er bewirkt, dass ein Computer Abrufen verifizierter Vermessungsdaten aus der Datenbank (104) von einem zweiten Standort, der vom ersten Standort entfernt ist, vornimmt.

14. Computerprogrammprodukt nach Anspruch 11, wobei die dritte Qualitätskontrollprüfung weiter Identifizieren einer Tendenz umfasst, basierend auf Beurteilen der Vermessungsrohdaten anhand der Vermessungsdaten von der einen oder den mehreren früheren Vermessungsstationen.

15. Computerprogrammprodukt nach Anspruch 11, wobei die Webanwendung weiter computerlesbaren Programmcode umfasst, der so angepasst ist, dass er eine oder mehrere Vermessungsberichtigungen aus dem Satz von Vermessungsdaten bestimmt.

## Revendications

1. Système pour améliorer la qualité de sondages directionnels, comprenant un ou plusieurs processeurs et une mémoire, dans lequel la mémoire et les un ou plusieurs processeurs exécutent une application Web, l'application Web comprenant des instructions exécutables par les un ou plusieurs processeurs pour :
recevoir par l'application Web, des données de sondage brutes acquises par un outil de sondage situé dans un puits de forage au niveau d'un site de plateforme de forage à un premier emplacement pendant une mesure de sondage à partir d'un puits de forage (140) au niveau du premier emplacement ;
vérifier que les données de sondage brutes satisfont à des exigences de données minimales ;
en réponse à la vérification que les données de sondage brutes satisfont aux exigences de données minimales, calculer un ensemble de paramètres de validation de contrôle qualité, dans lequel l'ensemble de paramètres de validation de contrôle qualité comprend des tolérances de contrôle qualité ;
vérifier, par l'application Web, la qualité des données de sondage brutes en utilisant des métriques de contrôle qualité, dans lequel les métriques de contrôle qualité comprennent :
(a) une première vérification de contrôle qualité, dans lequel la première vérification de contrôle qualité comprend une vérification que les données de sondage brutes sont exemptes d'erreurs grossières dues à une soumission (110) de données incorrectes, et au moins une des vérifications suivantes :
(b) une deuxième vérification de contrôle qualité, dans lequel la deuxième vérification de contrôle qualité comprend une vérification que des erreurs systématiques dans les données de sondage brutes se situent à l'intérieur des tolérances de contrôle qualité ; et
(c) une troisième vérification de contrôle qualité, dans lequel la troisième vérification de contrôle qualité comprend une vérification que les données de sondage brutes sont adéquates et exemptes d'erreurs grossières dues à une défaillance instrumentale ou à des interférences magnétiques externes (114), et dans lequel la troisième vérification de contrôle qualité évalue les données de sondage brutes par rapport à des sondages effectués au niveau de stations de sondage précédentes ;
alerter une plateforme de forage associée au puits de forage si les données de sondage brutes ne sont pas vérifiées avec les métriques de contrôle qualité ;
stocker, par l'application Web, les données de sondage brutes vérifiées dans une base de données (104) en nuage (106) ;
fournir un accès aux données de sondage brutes vérifiées issues d'un deuxième emplacement qui est distant du premier emplacement ;
dans lequel pour effectuer la première vérification de contrôle qualité, l'application Web est configurée en outre pour calculer une inclinaison et un azimut à partir de mesures d'accéléromètre et de magnétomètre incluses dans les données de sondage brutes ; et
comparer l'inclinaison et l'azimut calculés à l'inclinaison et l'azimut indiqués dans les données de sondage brutes, dans lequel pour effectuer la deuxième vérification de contrôle qualité, l'application Web est configurée en outre pour calculer des tolérances de contrôle qualité pour chacun de B total, Dip, et G total à partir d'un modèle d'erreurs d'outil de sondage, où B total est l'intensité du champ magnétique, Dip est la direction du champ magnétique par rapport à un plan horizontal, et G total est l'intensité du champ de gravité ;
déterminer si des différences entre des valeurs mesurées de B total, Dip, et G total déterminées par un ou plusieurs capteurs et des valeurs de référence de B total, Dip, et G total tombent à l'intérieur des tolérances de contrôle qualité correspondantes, dans lequel pour effectuer la troisième vérification de contrôle qualité, l'application Web est configurée en outre pour calculer des écarts-types des différences entre des valeurs mesurées de B total, Dip, et G total déterminées par les un ou plusieurs capteurs et des valeurs de référence de B total, Dip, et G total pour chaque station de sondage dans un ensemble de sondages précédents effectués par l'outil de sondage dans le puits de forage (140), où B total est l'intensité du champ magnétique, Dip est la direction de champ magnétique par rapport à un plan horizontal, et G total est l'intensité du champ de gravité ;
calculer les différences entre les valeurs mesurées et les valeurs de référence de B total, Dip, et G total pour les données de sondage brutes ; et
comparer les différences entre les valeurs mesurées et les valeurs de référence de B total, Dip, et G total pour les données de sondage brutes aux écarts-types afin de déterminer si les données de sondage brutes sont une aberration statistique ;
alerter, par l'application Web, un opérateur au niveau du premier emplacement lorsque les données de sondage brutes échouent à l'une des trois vérifications de contrôle qualité.

2. Système selon la revendication 1, dans lequel les instructions comprennent en outre des instructions pour :
recevoir, par l'application Web, des données de sondage brutes corrigées issues du deuxième emplacement, les données de sondage brutes corrigées étant générées en appliquant au moins une correction de sondage aux données de sondage brutes vérifiées au niveau du deuxième emplacement ;
stocker les données de sondage brutes corrigées dans la base de données (104) ;
afficher les données de sondage brutes corrigées au niveau du premier emplacement ; et
vérifier la qualité des données de sondage brutes corrigées en utilisant l'au moins une métrique de contrôle qualité.

3. Système selon la revendication 1, dans lequel l'application Web est configurée en outre pour :
afficher une alerte au niveau du premier emplacement avec un résultat de la vérification de la qualité des données de sondage brutes en utilisant l'au moins une métrique de contrôle qualité ; et
recevoir des nouvelles données de sondage brutes issues du premier emplacement et répéter la vérification de la qualité des données de sondage brutes ; et
stocker les données de sondage brutes vérifiées avec les nouvelles données de sondage brutes.

4. Système selon la revendication 1, dans lequel l'application Web est configurée en outre pour, dans le cadre de la troisième vérification de qualité, évaluer les données de sondage brutes par rapport aux données de sondage issues d'une ou plusieurs stations de sondage précédentes.

5. Système selon la revendication 4, dans lequel l'application Web est configurée en outre pour, dans le cadre de la troisième vérification de qualité, calculer un écart-type pour l'ensemble de données de sondage.

6. Système selon la revendication 4, dans lequel l'application Web est configurée en outre pour évaluer l'ensemble de données de sondage en utilisant une technique d'analyse de données multi-stations.

7. Système selon la revendication 6, dans lequel dans le cadre d'instructions pour évaluer l'ensemble de données de sondage en utilisant la technique d'analyse de données multi-stations l'application Web est configurée en outre pour déterminer une ou plusieurs sources d'erreurs dans l'ensemble de données de sondage.

8. Procédé pour améliorer la qualité d'un sondage directionnel, comprenant :
recevoir, par une application Web (102), des données de sondage brutes issues d'un outil de sondage situé dans un puits de forage (140) au niveau d'un site de plateforme de forage (146) à un premier emplacement ;
vérifier, par l'application Web, que les données de sondage brutes satisfont à des exigences de données minimales ;
en réponse à la vérification que les données de sondage brutes satisfont aux exigences de données minimales, calculer, par l'application Web, un ensemble de paramètres de validation de contrôle qualité, dans lequel l'ensemble de paramètres de validation de contrôle qualité comprend des tolérances de contrôle qualité ;
vérifier, par l'application Web, la qualité des données de sondage brutes en utilisant des métriques de contrôle qualité, dans lequel les métriques de contrôle qualité comprennent :
une première vérification de contrôle qualité, dans lequel la première vérification de contrôle qualité comprend une vérification que les données de sondage brutes sont exemptes d'erreurs grossières dues à une soumission (110) de fichier de données incorrectes, et au moins une des vérifications suivantes :
une deuxième vérification de contrôle qualité, dans lequel la deuxième vérification de contrôle qualité comprend une vérification que des erreurs systématiques dans les données de sondage brutes se situent à l'intérieur des tolérances de contrôle qualité (112) ; et
une troisième vérification de contrôle qualité, dans lequel la troisième vérification de contrôle qualité comprend une vérification que les données de sondage brutes sont adéquates et exemptes d'erreurs grossières dues à une défaillance instrumentale et à des interférences magnétiques externes (114), et dans lequel la troisième vérification de contrôle qualité évalue les données de sondage brutes par rapport à des sondages effectués au niveau de stations de sondage précédentes ;
alerter, par l'application Web, la plateforme de forage si la qualité des données de sondage brutes n'est pas vérifiée avec les métriques de contrôle qualité ; et
stocker, par l'application Web, les données de sondage brutes dans une base de données (104) si la qualité des données de sondage brutes est vérifiée avec les métriques de contrôle qualité, dans lequel la base de données est adaptée pour être accédée depuis un deuxième emplacement qui est distant du premier emplacement
autoriser, par l'application Web (102), un accès à l'ensemble de données de sondage brutes vérifiées issues du deuxième emplacement effectuant, au niveau d'un deuxième emplacement, au moins une analyse de données de sondage corrective sur les données de sondage brutes vérifiées ;
appliquer, au niveau d'un deuxième emplacement, au moins une correction de sondage aux données de sondage brutes vérifiées sur la base d'un résultat de l'au moins une analyse de données de sondage corrective ; et
recevoir, par l'application Web, des données de sondage corrigées, amenant ainsi l'application Web à ajouter les données de sondage corrigées à la base de données ; et
afficher les données de sondage corrigées au niveau du premier emplacement.

9. Procédé selon la revendication 8, dans lequel la base de données (104) comprend une base de données en nuage (106) accessible via l'Internet.

10. Procédé selon la revendication 8 comprenant en outre le fait d'autoriser un accès aux données de sondage brutes corrigées par un utilisateur au niveau de la plateforme de forage (146).

11. Produit programme informatique d'application Web incluant un support non transitoire lisible par ordinateur et un code de programme incorporé sur le support non transitoire lisible par ordinateur pour améliorer la qualité de sondages directionnels, l'application Web comprenant :
un code de programme lisible par ordinateur adapté pour amener un ordinateur à effectuer une réception de données de sondage brutes issues d'un outil de mesure pendant le forage MWD positionné au sein d'un puits de forage (140) au niveau d'une plateforme de forage à un premier emplacement ;
un code de programme lisible par ordinateur adapté pour amener un ordinateur à effectuer une vérification que les données de sondage brutes satisfont à des exigences de données minimales, les données de sondage brutes incluant des données correspondant à une profondeur, une inclinaison et un azimut de sondage et les B total, G total, et Dip correspondants ou des données selon 6 axes correspondant à des mesures d'accéléromètre et de magnétomètre ;
un code de programme lisible par ordinateur adapté pour amener un ordinateur à effectuer un calcul, en réponse à la vérification que les données de sondage brutes satisfont aux exigences de données minimales, d'un ensemble de paramètres de validation de contrôle qualité, dans lequel l'ensemble de paramètres de validation de contrôle qualité comprend des tolérances de contrôle qualité basées sur des coefficients d'erreurs et mises à l'échelle au même niveau sigma utilisé pour une planification d'évitement de collisions ;
un code de programme lisible par ordinateur adapté pour amener un ordinateur à effectuer une vérification de la qualité des données de sondage brutes en utilisant des métriques de contrôle qualité, dans lequel les métriques de contrôle qualité comprennent :
(a) une première vérification de contrôle qualité, dans lequel la première vérification de contrôle qualité comprend une vérification que les données de sondage brutes sont exemptes d'erreurs grossières dues à une soumission (110) de fichier de données incorrectes, et au moins une des vérifications suivantes :
(b) une deuxième vérification de contrôle qualité, dans lequel la deuxième vérification de contrôle qualité comprend une vérification que des erreurs systématiques dans les données de sondage brutes se situent à l'intérieur des tolérances de contrôle qualité, dans lequel la deuxième vérification de contrôle qualité comprend un calcul de tolérances de contrôle qualité pour chacun de B total, Dip, et G total à partir d'un modèle d'erreurs d'outil de sondage, où B total comprend une intensité du champ magnétique, Dip comprend une direction de champ magnétique par rapport à un plan horizontal, et G total comprend une intensité du champ de gravité et une détermination de si les différences entre des valeurs mesurées et des valeurs de référence de B total, Dip, et G total tombent à l'intérieur des tolérances de contrôle qualité correspondantes ; et
(c) une troisième vérification de contrôle qualité, dans lequel la troisième vérification de contrôle qualité comprend une vérification que les données de sondage brutes sont adéquates et exemptes d'erreurs grossières dues à une défaillance instrumentale ou à des interférences magnétiques externes (114), et dans lequel la troisième vérification de contrôle qualité évalue les données de sondage brutes par rapport à des sondages effectués au niveau de stations de sondage précédentes dans lequel la troisième vérification de contrôle qualité comprend un calcul d'écarts-types des différences entre des valeurs mesurées et des valeurs de référence de B total, Dip, et G total pour chaque station de sondage dans un ensemble de sondages précédents effectués par un outil de sondage dans le puits de forage (140), où B total comprend une intensité du champ magnétique, Dip comprend une direction de champ magnétique par rapport à un plan horizontal, et G total comprend une intensité du champ de gravité ; un calcul de différences entre des valeurs mesurées et des valeurs de référence de B total, Dip, et G total pour les données de sondage brutes ; et une comparaison des différences entre des valeurs mesurées et des valeurs de référence de B total, Dip, et G total pour les données de sondage brutes aux écarts-types pour déterminer si les données de sondage brutes comprennent une aberration statistique ;
un code de programme lisible par ordinateur adapté pour amener un ordinateur à effectuer une alerte d'une plateforme de forage associée au puits de forage si les données de sondage brutes ne sont pas vérifiées avec les métriques de contrôle qualité ; et
un code de programme lisible par ordinateur adapté pour amener un ordinateur à effectuer un stockage des données de sondage brutes vérifiées dans une base de données en nuage
un code de programme lisible par un ordinateur adapté pour amener un ordinateur à effectuer un affichage des données de sondage au niveau de la plateforme de forage via une interface utilisateur graphique GUI externe.

12. Produit programme informatique selon la revendication 11, dans lequel le code lisible par ordinateur comprend en outre un code de programme lisible par ordinateur adapté pour amener un ordinateur à effectuer une vérification de la qualité des données de sondage brutes corrigées en :
calculant une inclinaison et un azimut à partir d'une pluralité de mesures d'accéléromètre et de magnétomètre incluses dans les données de sondage brutes ;
comparant l'inclinaison et l'azimut calculés à l'inclinaison et l'azimut indiqués dans les données de sondage brutes.

13. Produit programme informatique selon la revendication 11, dans lequel le code lisible par ordinateur comprend en outre un code de programme lisible par ordinateur adapté pour amener un ordinateur à effectuer une récupération de données de sondage vérifiées issues de la base de données (104) depuis un deuxième emplacement qui est distant du premier emplacement.

14. Produit programme informatique selon la revendication 11, dans lequel la troisième vérification de contrôle qualité comprend en outre une identification d'une tendance sur la base d'une évaluation des données de sondage brutes par rapport aux données de sondage issues des une ou plusieurs stations de sondage précédentes.

15. Produit programme informatique selon la revendication 11, dans lequel l'application Web comprend en outre un code de programme lisible par ordinateur adapté pour déterminer une ou plusieurs corrections de sondage à partir de l'ensemble de données de sondage.
